# EUROPÄISCHE PATENTSCHRIFT

(11) **EP 3 911 857 B1**
(45) Veröffentlichungstag und Bekanntmachung des Hinweises auf die Patenterteilung: **17.08.2022**
(21) Anmeldenummer: 19831697.8
(22) Anmeldetag: 19.12.2019
(51) Int. Cl.: F03D 13/10, E04H 12/08, F03D 13/20

(54) **TRAGSTRUKTUR FÜR EINE WINDKRAFTANLAGE**
SUPPORT STRUCTURE FOR A WIND TURBINE
STRUCTURE DE SUPPORT POUR UNE ÉOLIENNE

(30) Priorität: 18.01.2019 DE 102019101330
(43) Veröffentlichungstag der Anmeldung: 24.11.2021
(73) Patentinhaber: RWE Renewables GmbH, 45145 Essen (DE)
(72) Erfinder: BARTMINN, Daniel, 25335 Elmshorn (DE); CZARNECKI, Artur, 22301 Hamburg (DE); MATLOCK, Benjamin, 20259 Hamburg (DE)
(74) Vertreter: Cohausz & Florack
(86) Internationale Anmeldenummer: PCT/EP2019/086234
(87) Internationale Veröffentlichungsnummer: WO 2020/148065

(56) Entgegenhaltungen:
- WO-A1-2011/099915
- WO-A1-2012/128693
- WO-A1-2017/167990
- DE-A1-102016 203 268

## Beschreibung

Der Gegenstand betrifft eine Tragstruktur, insbesondere für eine Windkraftanlage. Eine solche Tragstruktur kann Teil eines rohrförmigen Gründungspfahls einer Anlage, insbesondere einer Windkraftanlage, sein.

Aus dem Stand der Technik ist es bekannt, Tragstrukturen, z.B. Gründungspfähle aus übereinander angeordneten und miteinander verbundenen Tragstruktursegmenten zu errichten. Die Tragstruktursegmente wiederum werden aus einem, zwei oder mehr jeweils aus einer gebogenen Stahlplatte hergestellten Teilsegmenten zusammengesetzt.

Die Stahlplatten der Teilsegmente weisen produktionsbedingt üblicherweise eine Breitenerstreckung von ca. 3 m - 5 m und eine Längenerstreckung von bis zu 24 m auf. Zur Herstellung der Teilsegmente werden gemäß des Standes der Technik die Stahlplatten entlang deren Längenerstreckung gebogen, so dass die so hergestellten Teilzylindersegmente, auch Rohrschüsse genannt, eine der Breitenerstreckung der Stahlplatte entsprechende Höhenerstreckung aufweisen. Wenn folglich die Stahlplatte eine Breitenerstreckung von 3 m aufweist, wird durch Biegen der Stahlplatte entlang der Längenerstreckung ein Teilsegment mit einer Höhenerstreckung von 3 m erzeugt.

Wenn eine Tragstruktur aus zwei oder mehr Tragstruktursegmenten hergestellt wird, werden die Tragstruktursegmente jeweils an ihren Längskanten miteinander mittels Rundschweißnähten verbunden. Der Gründungspfahl wird dabei so zusammengebaut, dass aneinander grenzende Tragstruktursegmente mittels jeweils einer Rundschweißnaht so verbunden werden, dass die jeweiligen Längsachsen der Tragstruktursegmente kollinear zueinander verlaufen.

Zur Herstellung eines entsprechenden Gründungspfahls sind folglich viele Schweißnähte mit einer großen Gesamtlänge notwendig, wodurch sich die Herstellung des Gründungspfahls aufwendig und kostenintensiv gestaltet. So sind z.B. zur Herstellung von zwei Tragstruktursegmenten, die jeweils eine Höhe von 3 m und einen Durchmesser von 7 m aufweisen, und deren Verbindung Schweißnähte mit einer Gesamtlänge von 28 m notwendig, nämlich zwei mal jeweils 3 m Schweißnaht zur Verbindung der sich gegenüberstehenden Seitenkanten bzw. Materialkanten der einzelnen Teilsegmente und 22 m Rundschweißnaht zur Verbindung der zwei Tragstruktursegmente (bzw. 34m, wenn die einzelnen Rohrschüsse aus zwei Halbschalen hergestellt werden).

Die DE102016203268A1 offenbart einen Gründungspfahl mit zumindest zwei miteinander verbundenen Teilzylindersegmenten, die jeweils aus einer eine Längenerstreckung (L) und einer Breitenerstreckung (B) aufweisenden Stahlplatte erzeugt werden, wobei der Gründungspfahl dadurch gekennzeichnet ist, dass die jeweiligen Teilzylindersegmente durch Biegung der Stahlplatten entlang deren Breitenerstreckung (B) erzeugt werden.

Die WO2017167990A1 zeigt eine Tragstruktur, insbesondere für eine Windkraftanlage, mit mindestens zwei Segmenten, die derart miteinander verbunden sind, dass ihre Längsachsen (L) im Wesentlichen kollinear zueinander verlaufen. Mindestens eines der Segmente ist ein Rohrstück, das mindestens zwei einander zugewandte Anlageflächen aufweist, die zumindest teilweise miteinander verbunden sind.

Dem Gegenstand lag die Aufgabe zugrunde, die Anzahl der Schweißnähte zu verringern und insbesondere die Dauer der Schweißvorgänge zu reduzieren.

Diese Aufgabe wird durch eine Tragstruktur nach Anspruch 1 gelöst.

Wenn ein Tragstruktursegment aus zwei oder mehr Teilsegmenten hergestellt wird, werden die Teilsegmente jeweils an den Längskanten miteinander mittels Längsschweißnähten verbunden. Dabei ist zum Verbinden der Teilsegmente eine der Anzahl der Teilsegmente entsprechende Anzahl von Längsschweißnähten notwendig.

Die Teilsegmente sind aus Metallplatten, insbesondere Metallblechen gebildet. Die Metallplatten können dabei insbesondere Stahlplatten sein. Insbesondere haben die Metallplatten zumindest zweier benachbarter Teilsegmente eine gleiche Wandstärke (Dicke). Die Metallplatten aller ein Tragstruktursegment bildenden Teilsegmente können eine gleiche Wandstärke aufweisen. Die Metallplatten aller eine Tragstruktur bildenden Tragstruktursegmente können eine gleiche Wandstärke aufweisen. Zur Optimierung der Gesamttonnage können benachbarte Rohrschüsse, oder sogar Teilsegmente eines Rohrschusses unterschiedliche Wandstärken aufweisen.

Die Verschweißung der sich einander gegenüberliegenden Längskanten von Teilsegmenten erfolgt üblicherweise mittels einer Längsschweißnaht, die beispielsweise als beidseitige Stumpfnaht gemäß EN ISO 2553, Tabelle 2, mittels Unterpulverschweißen ausgeführt sein kann. Dabei werden die gegenüberstehenden Längskanten beispielsweise angeschärft, um im nachfolgenden Schweißprozess eine durchgeschweißte, beidseitige Stumpfnaht zu realisieren, so dass eine Verbindung der an ihren Fügeflächen aneinander anliegenden Blechkanten über der gesamten Wanddicke des Bleches der Teilsegmente erfolgt. Sowohl das Vorbereiten der gegenüberstehenden Längskanten als auch das Herstellen einer durchgeschweißten, beidseitigen Stumpfnaht sind zeit- und kostenintensiv.

Es wurde nunmehr erkannt, dass die Schweißnähte entlang der Längskanten nicht durchgehend Vollnähte sein müssen, um die für die Tragstruktur notwendigen mechanischen Eigenschaften zu erzielen. Vielmehr wird vorgeschlagen, dass die jeweilige Schweißverbindung abschnittsweise eine Dicke aufweist, die geringer ist, als eine Wandstärke der Metallplatte (Teilnaht) und abschnittsweise eine Dicke aufweist, die zumindest der Wandstärke der Metallplatte (Vollnaht) entspricht. Somit wechseln sich Vollnähte und Teilnähte entlang einer Längskante an der Fügefläche zwischen zwei Teilsegmenten ab.

Das Vorsehen einer Schweißverbindung, insbesondere einer Schweißnaht, insbesondere nach EN ISO 2553, Tabelle 2, mittels Unterpulverschweißen, insbesondere als Stumpfnaht, deren Dicke zumindest abschnittsweise geringer ist als die Wanddicke der Metallplatten (Teilnaht), bietet den Vorteil, dass im Vergleich zu Lösungen, die ein Durchschweißen über die volle Wanddicke (Vollnaht) fordern, die Prozesszeit und der Wärmeeintrag in das Bauteil verringert werden können. Überraschend hat sich gezeigt, dass bereits ein Verbinden der Fügeflächen in Teilbereichen ausreichend ist, um das Tragstrukturelement im Produktionsprozess zuverlässig in Form zu halten.

Die Dicke der Schweißverbindung, insbesondere einer Schweißnaht, ist dabei die Erstreckung der Schweißverbindung entlang der Wanddicke der Metallplatte. Mit anderen Worten werden sowohl die Wandstärken der Metallplatte als auch die Dicke der Schweißverbindung in einem Schnitt quer zur Längsachse, insbesondere orthogonal zu einer inneren und/oder äußeren Mantelfläche des Tragstruktursegments gemessen. Die Wanddicke des Tragstruktursegments entspricht bevorzugt der Dicke der Metallplatte, aus dem die Teilsegmente durch Umformen hergestellt worden sind.

Die Schweißverbindung kann sich über eine Teillänge, zwei oder mehr Längenabschnitte oder die gesamte Länge des Teilsegments erstrecken. Mehrere entlang ihrer Längsachse miteinander verschweißte Teilsegmente, die einen geschlossenen Ring bilden, können als Tragstruktursegment oder Rohrschuss verstanden werden. Die Länge des Tragstruktursegments kann dabei parallel zur Längsachse der Teilsegmente gemessen werden. Insbesondere können eine Mehrzahl separater Punktschweißungen oder eine oder mehrere Längsschweißnähte im Bereich einer Teillänge, eines Längenabschnitts oder entlang der gesamten Länge des Tragstruktursegments vorgesehen sein.

Die in einem Schnitt quer zur Längsachse gemessene Dicke d1 der Schweißverbindung deren Dicke geringer ist, als die Wandstäke der Metallplatte, beispielsweise der Schweißraupe einer Schweißnaht, kann kleiner oder gleich 4/5, oder kleiner oder gleich 1/2, bevorzugt kleiner oder gleich 1/10, weiter bevorzugt kleiner oder gleich 1/ 20 der Wanddicke d2 des Tragstruktursegments sein, und demnach eine der Vorschriften d1 = 0,8-d2, d1 = 0,5·d2, bevorzugt d1 = 0,1·d2, weiter bevorzugt d1 = 0,05·d2 erfüllen. So kann die Wanddicke des Tragstruktursegments beispielsweise 100 mm betragen, während die Dicke der Schweißverbindung, beispielsweise der Schweißraupe einer Schweißnaht, lediglich 5 mm oder weniger beträgt. Bei der Dicke d1 kann es sich vorliegend beispielsweise um die Nahtdicke s gemäß EN ISO 2553, Tabelle 5, handeln.

Die Tragstruktur wird aus einer Mehrzahl von entsprechend gebildeten Tragstruktursegmenten zusammengebaut, indem stirnseitig aneinander grenzende Tragstruktursegmente mittels jeweils einer Rundschweißnaht so verbunden werden, dass die jeweiligen Längsachsen der Tragstruktursegmente kollinear zueinander verlaufen. Diese Rundschweißnaht ist bevorzugt eine Vollnaht.

Die Breitenerstreckung der jeweiligen Metallplatten, aus denen die Teilsegmente durch Biegung erzeugt werden können, beträgt üblicherweise 3 m - 5 m, wohingegen die Längenerstreckung der Metallplatten, aus denen die Teilsegmente gebildet werden, bis zu 24 m betragen kann.

Die Längskanten der jeweiligen Teilsegmente sind parallel zueinander angeordnet und folglich einander gegenüberliegend angeordnet.

Vorzugsweise umfasst ein Tragstruktursegment mehr als zwei, nämlich drei, vier, fünf, sechs, sieben, acht oder mehr miteinander verbundenen Teilsegmente. Beschränkungen hinsichtlich der Anzahl der Teilsegmente bestehen insofern nicht. Die Anzahl der Teilsegmente, aus denen ein Tragstruktursegment hergestellt wird, ist lediglich vom Durchmesser der Tragstruktur und der jeweiligen Längenerstreckung der Metallplatten, aus denen die Teilsegmente gebildet werden, abhängig.

Vorzugsweise sind die Teilsegmente als Teilzylindersegmente aus der Metallplatte durch Biegung entlang der Breitenerstreckung der Metallplatte hergestellt.

Übergänge zwischen verschiedenen Durchmessern der Rohrschüsse werden dabei durch konische Teilsegmente hergestellt. Es ist üblich, dass eine Tragstruktur über die vertikale Erstreckung mehr als einen Durchmesser aufweist.

Ein Biegeradius der Teilsegmente kann größer kleiner oder gleich des Radius der umschließenden Kreislinie sein. Somit können Teilsegmente eines Rohrschusses, der die umschließende Kreislinie bildet, verschiedene Biegeradien aufweisen. Dies kann die Stabilität des Rohrschusses erhöhen. Die Teilsegmente könne entlang ihrer Stirnkanten nicht rund, insbesondere eliptisch, facettiert, hypozykloid oder epizykloid gebogen sind.

Gemäß einem Ausführungsbeispiel wird vorgeschlagen, dass miteinander verbundene Teilsegmente in Längserstreckung zueinander versetzt sind, so dass deren Stirnkanten zueinander axial (also in Richtung der Längsachse des Tragstruktursegments) beabstandet sind. Durch das Versetzen in Längserstreckung sind die Stirnkanten zueinander versetzt. Hierdurch wird ein Verband der Teilsegmente erreicht, der aufgrund der versetzten Stirnkanten eine erhöhte Steifigkeit aufweist. Zum Abschluss eines Tragstruktursegments kann dieses eine Stirnkante aufweisen die in einer Ebene verläuft, wenn Teilsegmente mit verschiedenen Längserstreckungen an ihren Stirnkanten miteinander verbunden sind. Dabei kann der Verband als Halbverband oder Viertelverband gebildet sein. Liegen die Stirnkanten der Teilsegmente stets in einer Ebene, kann von einem Kreuzverband die Rede sein.

Auch können zwei einander benachbarte Stirnkanten voneinander beabstandet sein, so dass zwischen zwei Teilsegmenten in axialer Richtung eine Auslassung gebildet ist. Dadurch wird der Materialeinsatz für einen Rohrschuss reduziert.

Gemäß einem Ausführungsbeispiel wird vorgeschlagen, dass zwei Teilsegmente an einander anliegenden Fügeflächen entlang der Stirnkanten über eine Schweißverbindung verbunden sind, wobei die Schweißverbindung eine Dicke aufweist, die zumindest abschnittsweise geringer ist, als eine Wandstärke der Metallplatte. Die Verbindung zwischen Teilsegmenten an einander anliegenden Stirnkanten kann als Teilnaht oder Vollnaht ausgeführt sein. Umlaufend nebeneinander anliegende Stirnkanten können wechselweise als Teilnaht oder Vollnaht gebildet sein oder es können alle oder einige Verbindungen von Stirnkanten als Teilnaht oder Vollnaht gebildet sein. Ein Tragstruktursegment kann umlaufend aus miteinander an ihren Längskanten verschweißten Teilsegmenten gebildet sein und in seiner Längenerstreckung aus jeweils zumindest zwei Teilsegmenten, die an ihren Stirnkanten miteinander durch eine Teilnaht verbunden sind. Zwei aneinander angrenzende Tragstruktursegmente können umlaufend an ihren aneinander anliegenden Stirnkanten durch eine Vollnaht miteinander verschweißt sein.

Gemäß einem Ausführungsbeispiel wird vorgeschlagen, dass zwei einander an einem Teilsegment gegenüberliegende Fügeflächen entlang der Längskanten mit Schweißverbindungen, deren Dicke zumindest die Wandstärke der Metallplatte aufweist, zueinander in Längserstreckung versetzt sind. Das bedeutet, dass an einer ersten Längskante die Vollnähte einen ersten Abstand zu einer Stirnkante des Teilsegments haben und an der anderen Längskante haben die Vollnähte einen hiervon verschiedenen Abstand zu der Stirnkante des Teilsegments. Umlaufend in einer Ebene senkrecht zur Längsachse des Tragstruktursegments kann somit an einer Fügefläche eine Vollnaht und einer nächsten Fügefläche eine Teilnaht gebildet sein. Auch können zwei einander an einem Teilsegment gegenüberliegenden Fügeflächen entlang der Längskanten mit Schweißverbindungen, deren Dicke zumindest die Wandstärke einer der benachbarten Teilsegmente aufweist, zueinander in Längserstreckung auf gleicher Höhe liegen.

Gemäß einem Ausführungsbeispiel wird vorgeschlagen, dass in einem Abschnitt der Fügeflächen mit einer Schweißverbindung, deren Dicke geringer ist, als die Wandstärke der Metallplatte ist, zwischen den Fügeflächen eine Halteklammer angeordnet ist.

Ergänzend können die Fügeflächen über wenigstens eine Halteklammer miteinander verbunden sein. Dabei kann es sich um ein Zwischenstück handeln, das stoffschlüssig oder lösbar im Bereich der Fügeflächen befestigt sein kann, um die Fügeflächen miteinander zu verbinden. Die Halteklammer dient dazu, die verbundenen Teilsegmente für Handhabungs- und Verbindungsvorgänge und ggf. im fertig montierten Zustand in der gewünschten Form zu halten. Nachdem ein Tragstruktursegment stirnseitig mit einem weiteren Tragstruktursegment verbunden worden ist, kann die Halteklammer entfernt werden oder am Bauteil verbleiben.

Die Halteklammer bietet den Vorteil, dass auf eine durchgehende Längsschweißnaht im Bereich der Fügeflächen verzichtet werden kann und dennoch die Formstabilität des Tragstruktursegments gewährleistet wird. So können die einander zugewandten Fügeflächen beispielsweise einen Abstand von einem Meter zueinander aufweisen, wobei dieser Abstand mit Hilfe der Halteklammer überbrückt wird, um eine Verbindung zwischen den Fügeflächen herzustellen. Es versteht sich, dass zwei oder mehr Halteklammern zwischen den Fügeflächen vorgesehen sein können.

Die Halteklammer kann durch eine Schweiß-, Schraub-, Bolzen-Niet- oder Magnetverbindungen im Bereich einer jeweiligen Fügefläche befestigt sein. Die Schweißverbindung kann dabei beispielsweise in voranstehend beschriebener Weise derart ausgeführt sein, dass kein Durchschweißen erfolgt, sondern die Schweißung lediglich einen Teilbereich der Dicke und/oder Länge der einander zugewandten, zu verbindenden Bauteilabschnitte ausmacht.

Gemäß einem Ausführungsbeispiel wird vorgeschlagen, dass die Halteklammer zweiseitig von den Fügeflächen eingefasst ist und/oder bündig zu der äußeren und/oder inneren Mantelfläche zumindest eines der Teilsegmente abschließt. Auf diese Weise kann die Halteklammer in die Wandungsgeometrie des Tragstruktursegments eingebunden werden, ohne die äußeren Abmessungen des Bauteils bzw. den erforderlichen Bauraum des Tragstruktursegments im fertig montierten Zustand zu vergrößern.

Gemäß einem Ausführungsbeispiel wird vorgeschlagen, dass die Halteklammer zumindest eine konkave Aussparung, insbesondere Ausrundung aufweist, wobei die Aussparung insbesondere im Wesentlichen sprungfrei in die Fügeflächen übergeht, und/oder eine im Wesentlichen bikonkave Form aufweist. Um möglichst wenig Zugspannungen in angrenzende bzw. benachbart vorgesehene Schweißnähte einzuleiten, kann die Halteklammer wenigstens eine konkave Ausrundung aufweisen, wobei die Ausrundung insbesondere im Wesentlichen sprungfrei in die Fügeflächen übergehen kann. Die Ausrundung kann als Durchführung für Kabel, Leitungen, Rohre oder anderer Halte- und/oder Anschlusselemente genutzt werden und somit als Durchgangsöffnung von der Umgebung hin zum Inneren des Tragstruktursegments dienen und umgekehrt.

Alternativ oder ergänzend kann die Halteklammer eine im Wesentlichen bikonkave Form aufweisen. Eine solche bikonkave Form zeichnet sich insbesondere durch zwei voneinander abgewandte Ausrundungen aus, die bevorzugt jeweils im Wesentlichen sprungfrei in die gegenüberliegenden Fügeflächen übergehen können. Auf diese Weise kann eine jeweils unter einem Abstand zu den beiden Stirnseiten eines Tragstruktursegments angeordnete Halteklammer zweiseitig die Übertragung von Zugspannungen in angrenzende bzw. benachbarte Schweißnähte reduzieren. Eine bikonkave Halteklammer kann daher insbesondere zur Risshemmung oder Rissbegrenzung zwischen zwei benachbart angeordneten Schweißnähten dienen. Ein sich ausbreitender Riss einer Schweißnaht kann somit im Bereich der Halteklammer unterbrochen bzw. zum Stillstand gebracht werden, ohne dass über die Halteklammer hinweg eine Rissfortpflanzung in angrenzende Schweißnähte stattfindet.

Gemäß einem Ausführungsbeispiel wird vorgeschlagen, dass die Fügeflächen zumindest abschnittsweise einen Abstand zueinander aufweisen und/oder aneinander anliegen.

Die Fügeflächen können "auf Stoß" liegen und unmittelbar aneinander angrenzen. In diesem Fall können die Fügeflächen in einfacher Weise mit einer oder mehreren Längsschweißnähten unmittelbar miteinander verbunden werden, wobei die Längsschweißnähte abwechselnd Vollnähte und Teilnähte aufweisen. Einander kontaktierende Fügeflächen bieten weiterhin den Vorteil, dass die Rundschweißnaht zu einem angrenzenden Tragstruktursegment ohne Unterbrechung durchgeschweißt werden kann. Insbesondere beim Unterpulverschweißen ist eine durchgehende Schweißnaht vorteilhaft, da die Naht ohne ein Absetzen der Schweißvorrichtung erzeugt werden kann.

Auch kann zwischen den Fügeflächen wenigstens ein Blech angeordnet sein, wobei das Blech insbesondere sich im Wesentlichen in das Rohrinnere auskragend erstreckt und/oder einen im Wesentlichen L-förmigen Querschnitt aufweist, wobei auch einfache gerade Bleche denkbar sind. Das Blech kann jeweils mit den Fügeflächen verschweißt sein, so dass die Fügeflächen über das Blech mittelbar miteinander verbunden sind. Beispielsweise können sich im Wesentlichen parallel zueinander erstreckende Längsschweißnähte vorgesehen sein, die das Blech zumindest abschnittsweise zweiseitig einfassen und jeweils mit einer der Fügeflächen verbinden. Das Blech kann zum Halten und Führen von Kabeln, Leitungen oder Rohren und/oder zur Befestigung von Komponenten von Korrosionsschutzsystemen oder Wartungseinrichtungen dienen. Das Blech kann im Bereich einer Vollnaht und/oder einer Teilnaht angeordnet sein. Das Blech selbst kann auch durch eine Vollnaht in einem ersten Bereich und eine Teilnaht in einem zweiten Bereich mit den Teilsegmenten verbunden sein.

Die Schweißverbindung kann zur Steigerung ihrer Festigkeit einer mechanischen Nachbearbeitung unterzogen worden sein. Entsprechend einer vorteilhaften Weiterbildung weist die Schweißverbindung in einem Dickenquerschnitt Druckeigenspannungen auf, wobei die Druckeigenspannungen insbesondere durch Kaltverformen und/oder Schmieden erzeugt worden sind. Das Einbringen von Druckeigenspannungen in die Schweißnaht reduziert die Anfälligkeit gegen Rissbildungen bei Zugbelastung. Wenn vorliegend von einem Dickenquerschnitt der Schweißverbindung, insbesondere einer Schweißnaht, gesprochen wird, ist damit ein Schnitt quer, insbesondere orthogonal, zur Längsachse der Tragstruktur gemeint. Die Druckeigenspannungen im Bereich der Schweißnaht sind in bekannter Weise nachweisbar und können beispielsweise durch die Bestimmung der Oberflächenhärte der Naht abgeschätzt werden. Alternativ oder ergänzend kann die Schweißverbindung durch Aufbohren entlastet worden sein. So kann die Schweißnaht Bohrungen oder Ausnehmungen umfassen, die gezielt in Bereichen angeordnet sind, die anfällig für Rissbildungen aufgrund von Zugeigenspannungen sind. Beispielsweise können vorliegend die Übergangsbereiche zwischen einer Längsnaht und einer angrenzenden Rundnaht durch eine Kernbohrung entlastet werden, wobei ein Teil der Längsnaht, insbesondere deren Übergangsbereich zum Grundwerkstoff, zumindest abschnittsweise entfernt wird.

Gemäß einem Ausführungsbeispiel wird vorgeschlagen, dass die Tragstruktur eine Gründungsstruktur, insbesondere ein Gründungspfahl, insbesondere für eine Windkraftanlage auf See, insbesondere ein Monopile, Triplet, Tripod oder Jacket ist. Die Tragstruktur kann insbesondere eine Turmstruktur einer Offshore-Anlage, insbesondere einer Windkraftanlage sein.

Gemäß einem Ausführungsbeispiel wird vorgeschlagen, dass miteinander verbundene, einen Ring bildenden Teilsegmente, deren jeweiligen Längskanten parallel zueinander angeordnet sind, ein Tragstruktursegment bilden, und dass die Tragstruktur zumindest zwei Tragstruktursegmente umfasst, deren Längsachsen im Wesentlichen kollinear zueinander verlaufen, und deren Stirnkanten miteinander verbunden sind. Die aus den Teilsegmenten gebildeten Tragstruktursegmente können miteinander entlang ihrer Stirnkanten verbunden sein und so eine Tragstruktur bilden. Dabei verlaufen die Längsachsen der jeweiligen Tragstruktursegmente kollinear zueinander.

Gemäß einem Ausführungsbeispiel wird vorgeschlagen, dass die aneinander anliegenden Stirnkanten zweier Tragstruktursegmente zumindest teilweise umlaufend durch eine Schweißverbindung verbunden sind, die eine Dicke aufweist, die zumindest der Wandstärke der Metallplatte entspricht. Zwei Tragstruktursegmente sind somit durch eine Vollnaht miteinander verbunden.

Gemäß einem Ausführungsbeispiel wird vorgeschlagen, dass die Längskanten von Teilsegmenten zweier stirnseitig aneinander anliegenden Tragstruktursegmenten zueinander winkelversetzt sind. Sind zwei Tragstruktursegmente über ihre Stirnflächen verbunden, so können sie so winkelversetzt zueinander sein, dass die Fügeflächen zwischen den jeweiligen Teilsegmenten nicht zueinander fluchten und in einer Linie liegen, sondern dass die Fügeflächen zweier benachbarter Tragstruktursegmente zueinander versetzt sind.

Auch wird vorgeschlagen, dass die Lage der Teilnaht bündig zur äußeren oder inneren Mantelfläche des Teilsegmentes, mittig oder in asymmetrischen Abstand zu den Mantelflächen des Teilsegmentes liegt.

Nachfolgen wird der Gegenstand anhand einer Ausführungsbeispiele zeigenden Zeichnung näher erläutert. In der Zeichnung zeigen:
- Fig. 1: Eine Metallplatte eines Teilsegments;
- Fig. 1b: eine gebogene Metallplatte gemäß Figur 1a;
- Fig. 2: miteinander entlang der Längskanten verbundene Teilsegmente;
- Fig. 3a: zwei Tragstruktursegmente, welche entlang ihrer Stirnkante miteinander verbunden sind;
- Fig. 3b: ein Tragstruktursegment mit versetzt zueinander angeordneten Teilsegmenten;
- Fig. 4: eine Verbindung von zwei Teilsegmenten entlang einer Stirnkante;
- Fig. 5a,: b eine Vollnaht sowie eine Teilnaht;
- Fig. 6: eine Teilnaht mit einem L-förmigen Blech;
- Fig. 7a: eine Schweißnaht mit einer Halteklammer;
- Fig. 7b: die Schweißnaht zwischen den Teilsegmenten und der Halteklammer gemäß Fig. 7a

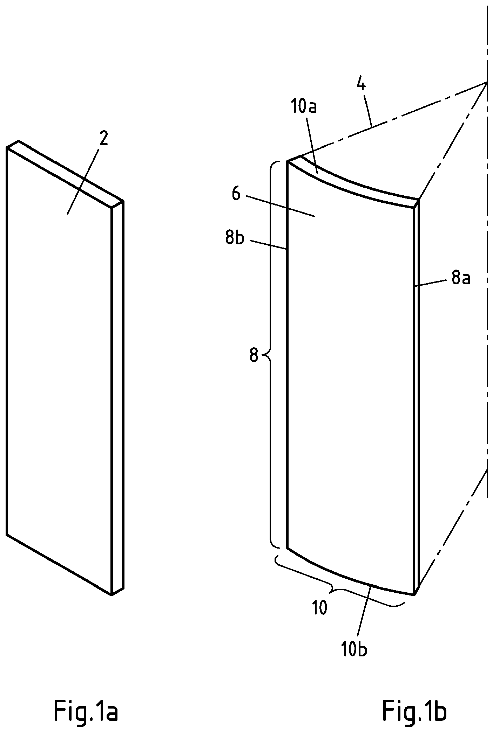

Fig. 1 zeigt eine Metallplatte 2, die beispielsweise aus einem Metallblech, insbesondere einem Stahlblech gebildet ist. Die Metallplatte 2 wird, wie in der Fig. 1b gezeigt, entlang eines Biegeradius 4 gebogen. Der Biegeradius 4 entspricht dabei insbesondere einem Radius eines Tragstruktursegments, mithin einem Radius einer Tragstruktur eines rohförmigen Gründungspfahls, wie nachfolgend noch beschrieben werden wird. Der Biegeradius kann aber auch größer oder kleiner als der umschließende Radius des Teilsegmentes sein.

Die gebogene Metallplatte 2 bildet ein Teilsegment 6. Das Teilsegment 6 hat eine Längenerstreckung 8 sowie eine Breitenerstreckung 10. In der Längenerstreckung 8 liegen zwei Längskanten 8a, b einander gegenüber und in der Breitenerstreckung 10 liegen zwei Stirnkanten 10a, b einander gegenüber. Die Metallplatte 2 des Teilsegments 6 ist bevorzugt rechteckig.

Um eine Tragstruktur zu bilden, werden die Teilsegmente 6 entlang ihrer Längskanten 8a, b miteinander gefügt. Die an den Längskanten 8a, b anliegende schmale Oberfläche kann als längsseitige Fügefläche zwischen zwei Teilsegmenten 6 verstanden werden. Die an den Stirnkanten 10a, b anliegende schmale Oberfläche kann als stirnseitige Fügefläche zwischen zwei Teilsegmenten 6 verstanden werden.

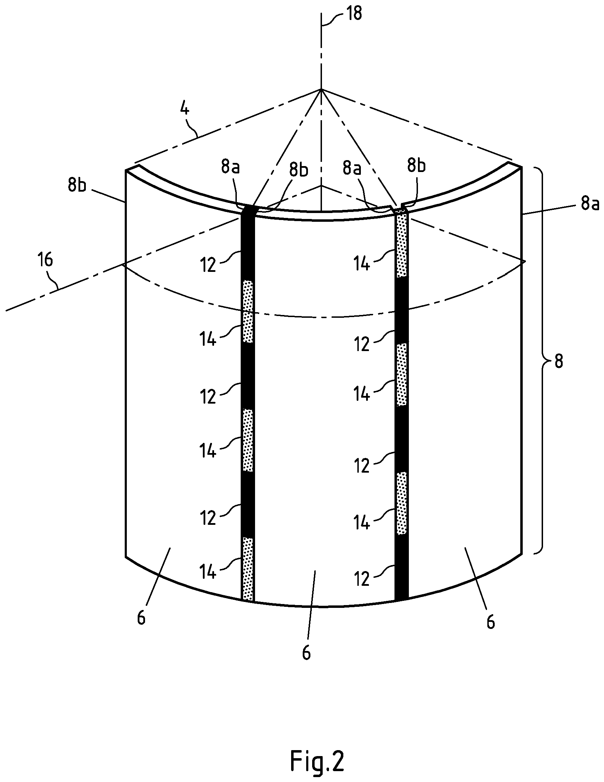

Zum Fügen werden jeweils zwei Teilsegmente 6 mit Längskanten 8a, b bzw. deren längsseitigen Fügeflächen an einander angelegt, wie in der Fig. 2 zu erkennen ist. Anschließend erfolgt ein Verschweißen der Teilsegmente 6, wobei die Schweißnaht in Teilen aus Vollnähten 12 und in Teilen aus Teilnähten 14 oder auch ohne Naht gebildet sein kann. In der Fig. 2 ist zu erkennen, dass aneinander anliegenden Längskanten 8a, 8b mittels der Vollnaht 12 sowie der Teilnaht 14 miteinander verschweißt sind. Entlang der Längenerstreckung 8 wechseln sich so Vollnähte 12 und Teilnähte 14 einander ab.

In der Fig. 2 ist auch zu erkennen, dass es möglich ist, dass die Vollnähte 12 und mithin die Teilnähte 14 zu einer Ebene 16 senkrecht zu eine Längsachse 18 versetzt sind. Das heißt, dass ein Teilsegment 6 an einer ersten Längskante 8a eine Vollnaht 12 haben kann, wohingegen in der Ebene 16 auf der gegenüber liegenden Seite des Teilsegments 6 an der Längskante 8b eine Teilnaht 14 sein kann. Mit anderen Worten sind die Vollnähte 12 von einander gegenüber liegenden Fügeflächen an Längskanten 8a, b zu einer Längsachse 18 zu einander versetzt.

In einer weiteren Ausgestaltung liegen Vollnähte und Teilnähte umlaufend weitestgehend in einer Ebene.

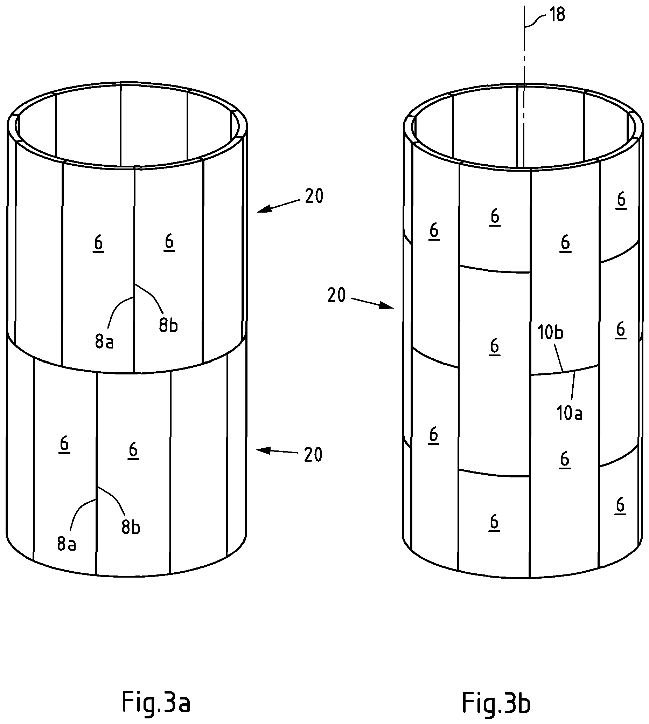

Die miteinander verschweißten Teilsegmente 6 sind aufgrund ihrer Biegung um den Biegeradius 4 zu einem rohförmigen Tragstruktursegment zusammen gefügt, wie in Fig. 3a gezeigt.

Jeweils entlang der Längskanten 8a, b miteinander gefügte Teilsegmente 6 bilden zusammen ein Tragstruktursegment 20. Zwei Tragstruktursegmente 20 sind an ihren Stirnkanten über eine Vollnaht 22 miteinander verbunden. Wie in der Fig. 3a zu erkennen ist, sind die Längskanten 8a, b von Teilsegmenten 6 zweier aneinander anliegender Tragstruktursegmente 20 zu einander winkelversetzt. Hierdurch erstreckt sich die Längsnaht entlang der Fügefläche an den Längskanten 8a, b nur über ein Tragstruktursegment 20 und im nächsten daran anliegenden Tragstruktursegment 20 ist eine Längsnaht entlang der Fügefläche an den Längskanten 8a, b dazu winkelversetzt.

Ein Tragstruktursegment 20 kann, wie in Fig. 3b gezeigt, aus Teilsegmenten 6 gebildet sein, welche mit ihren Stirnkanten 10a, b in Längsachse 18 zu einander versetzt sind. Dabei können die an einander anliegenden Stirnkanten 10a, b mit einer Teilnaht 14 miteinander gefügt sein. Die Fügeflächen entlang der Längskanten 8a, b können mit einander abwechselnden Vollnähten 12 und Teilnähten 14 gebildet sein.

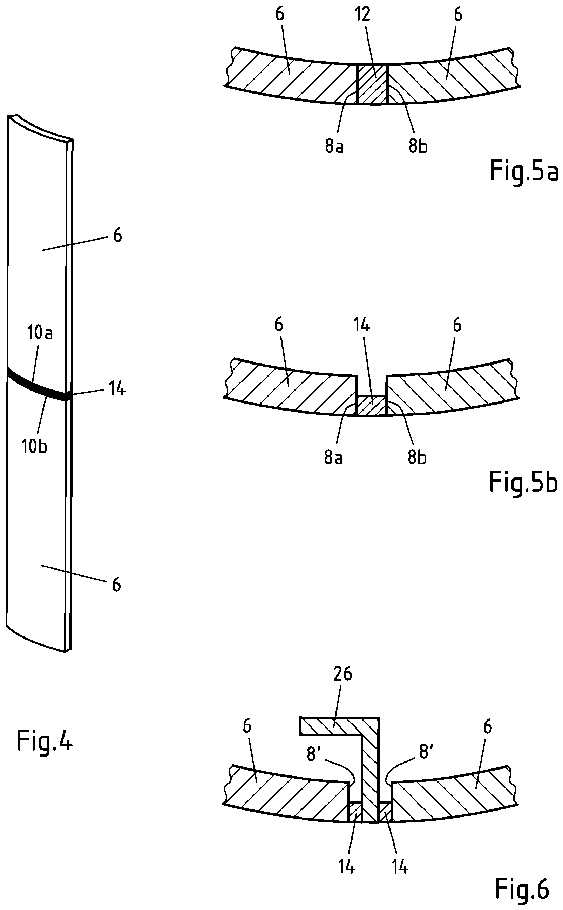

Fig. 4 zeigt zwei Teilsegmente 6, welche an ihrer Stirnkante 10a, b über eine Teilnaht 14 miteinander verbunden sind.

Fig. 5a zeigt eine Vollnaht 12. Zu erkennen ist, dass diese über die gesamte Materialstärke der Teilsegmente 6 sich an deren Längskanten 8a, b erstreckt. Fig. 5b zeigt eine Teilnaht, bei der zu erkennen ist, dass diese sich nur über Teile der Materialstärke der Teilsegmente 6 erstreckt. Die Lage der Teilnaht kann dabei bündig zur Außenseite, zur Innenseite der Mantelflächen des Teilsegmentes, mittig oder in asymmetrischen Abstand zu den Mantelflächen liegen.

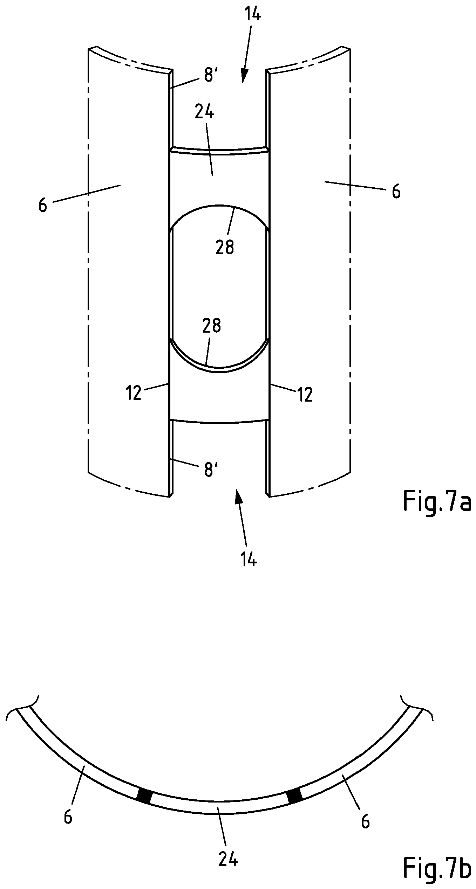

Die Verbindung der Fügeflächen 18 des Segments 14 kann eine Halteklammer 24 aufweisen (Fig. 7a). Die Halteklammer 24 ist zweiseitig von den Nähten 12 eingefasst und schließt bündig zur inneren Mantelfläche (nicht dargestellt) und äußeren Mantelfläche des Teilsegments 6 ab. Die Halteklammer 24 ist mit den Längskanten 8a, b, insbesondere den längsseitigen Fügeflächen 8' des Teilsegments 6 verschweißt. Dies ist in Fig. 7b gezeigt. Dort ist zu erkennen, dass die Halteklammer 24 durch eine Vollnaht 12 mit den angrenzenden Fügeflächen 8' verbunden ist.

Die Halteklammer 24 weist zwei konkave Ausrundungen 28 auf, die im Wesentlichen sprungfrei in die längsseitige Fügeflächen 8', so dass insbesondere keine Stufe bzw. kein Absatz im Übergang von einer Ausrundung 28 hin zur den einander zugewandten Fügeflächen 8' vorgesehen ist. Die Halteklammer 24 weist eine im Wesentlichen bikonkave Form auf.

Durch die bikonkave Form der Halteklammer 24 werden angrenzende bzw. benachbarte Schweißnähte 14 entlastet, so dass insbesondere der Rissbildung im Bereich der Schweißnähte 14 durch Zug-spannungen entgegengewirkt werden kann. Weiter kann die Halteklammer 24 als Rissbegrenzer dienen. Beim Versagen einer der Schweißnähte 14 des Teilsegments 6 setzt sich ein Riss demnach nicht über die gesamte Länge des Segments 14 fort, sondern wird im Bereich der Halteklammer 24 unterbrochen.

Vorliegend ist die Halteklammer 24 dauerhaft in die Tragstruktur eingebunden. Gemäß alternativen Ausführungsformen kann eine Halteklammer 24 auch entfernt werden, nachdem die Segmente 6 stirnseitig miteinander verbunden worden sind. Auf diese Weise kann eine größere Durchgangsöffnung geschaffen werden, um Kabel oder andere Anbauteile zu befestigen oder durch die Rohrwandung zu führen, das Gewicht zu reduzieren oder durch eine Wiederverwendung der Halteklammer Kosten zu sparen.

Um die Festigkeit der Schweißnähte 12, 14, insbesondere gegenüber Zugbelastungen, zu steigern, sind durch Kaltumformung Druckeigenspannungen in die Schweißnähte 12, 14 eingebracht worden. Alternativ oder ergänzend können Druckeigenspannungen auch durch Schmieden in die Schweißnähte eingebracht werden.

Auch kann zwischen die Fügeflächen 8' ein Blech 26 eingebracht sein, welches insbesondere L-förmig ist. Das Blech 26 kann insbesondere im Bereich einer Teilnaht 14 vorgesehen sein, wie in Fig. 6 gezeigt.

### Bezugszeichenliste

- 2: Metallplatte
- 4: Biegeradius
- 6: Teilsegment
- 8: Längserstreckung
- 8a,b: Längskante
- 8': Fügefläche
- 10: Breitenerstreckung
- 10a,b: Stirnkante
- 12: Vollnaht
- 14: Teilnaht
- 16: Ebene
- 18: Längsachse
- 20: Tragstruktursegment
- 24: Halteklammer
- 26: Blech
- 28: Ausrundung

## Patentansprüche

1. Tragstruktur, insbesondere für eine Windkraftanlage, mit
- zumindest zwei miteinander zumindest teilweise verbundenen Teilsegmenten (6), die jeweils aus einer eine Längserstreckung (8) und eine Breitenerstreckung (10) aufweisenden Metallplatte (2) gebildet sind, wobei die Längserstreckung (8) größer ist als die Breitenerstreckung (10), und wobei
- die Teilsegmente (6) jeweils sich in Längserstreckung (8) erstreckende Längskanten (8a, b) aufweisen und an einander anliegenden Fügeflächen (8') entlang der Längskanten (8a, b) über jeweils eine Schweißverbindung miteinander verbunden sind,
- die Teilsegmente (6) jeweils sich in Breitenerstreckung (10) erstreckende Stirnkanten (10a, b) aufweisen, wobei die Teilsegmente (6) jeweils entlang ihrer Stirnkanten (10a, b) gebogen sind,
**dadurch gekennzeichnet,**
- **dass** die jeweilige Schweißverbindung abschnittsweise eine Dicke aufweist, die geringer ist, als eine Wandstärke der Metallplatte (2) und abschnittsweise eine Dicke aufweist, die zumindest der Wandstärke der Metallplatte (2) entspricht.

2. Tragstruktur nach Anspruch 1,
**dadurch gekennzeichnet,**
- **dass** der Biegeradius (4) der Teilsegmente (6) größer, kleiner oder gleich des Radius der umschließenden Kreislinie ist und/oder
- **dass** die Teilsegmente (6) entlang ihrer Stirnkanten (10a, b) nicht rund, insbesondere eliptisch, facettiert, hypozykloid oder epizykloid gebogen sind.

3. Tragstruktur nach Anspruch 1 oder 2,
**dadurch gekennzeichnet,**
- **dass** miteinander verbundene Teilsegmente (6) in Längserstreckung (8) zueinander versetzt sind, so dass deren Stirnkanten (10a, b) zueinander axial beabstandet sind und/ oder
- **dass** miteinander verbundene Teilsegmente (6) in Längserstreckung (8) zueinander versetzt sind, so dass deren Stirnkanten (10a, b) zueinander axial beabstandet sind und zumindest ein Teilsegment (6) vom benachbarten Teilsegment (6) in Längsrichtung beabstandet ist, so dass dadurch eine Auslassung entsteht.

4. Tragstruktur nach einem der vorangehenden Ansprüche,
**dadurch gekennzeichnet,**
- **dass** zwei Teilsegmente (6) an einander anliegenden Fügeflächen (8') entlang der Stirnkanten (10a, b) über eine Schweißverbindung verbunden sind, wobei die Schweißverbindung eine Dicke aufweist, die zumindest abschnittsweise geringer ist, als eine Wandstärke der Metallplatte (2).

5. Tragstruktur nach einem der vorangehenden Ansprüche,
**dadurch gekennzeichnet,**
- **dass** zwei einander an einem Teilsegment (6) gegenüberliegende Fügeflächen (8') entlang der Längskanten (8a, b) mit Schweißverbindungen, deren Dicke zumindest die Wandstärke einer der benachbarten Metallplatte (2) aufweist, zueinander in Längserstreckung (8) versetzt sind und/ oder
- **dass** zwei einander an einem Teilsegment (6) gegenüberliegenden Fügeflächen (8') entlang der Längskanten (8a, b) mit Schweißverbindungen, deren Dicke zumindest die Wandstärke einer der benachbarten Teilsegmente (6) aufweist, zueinander in Längserstreckung (8) auf gleicher Höhe liegen.

6. Tragstruktur nach einem der vorangehenden Ansprüche,
**dadurch gekennzeichnet,**
- **dass** in einem Abschnitt der Fügeflächen (8') mit einer Schweißverbindung, deren Dicke geringer ist, als die Wandstärke der Metallplatte (2) ist, zwischen den Fügeflächen (8') eine Halteklammer (24) angeordnet ist und/ oder
- **dass** die Halteklammer (24) zweiseitig von den Fügeflächen (8' eingefasst ist und/oder bündig zu der äußeren und/oder inneren Mantelfläche zumindest eines der Teilsegmente (6) abschließt

7. Tragstruktur nach einem der Ansprüche 5 oder 6,
**dadurch gekennzeichnet,**
- **dass** die Halteklammer (24) zumindest eine konkave Aussparung, insbesondere Ausrundung (28) aufweist, wobei die Aussparung insbesondere im Wesentlichen sprungfrei in die Fügeflächen (8') übergeht, und/oder eine im Wesentlichen bikonkave Form aufweist.

8. Tragstruktur nach einem der vorhergehenden Ansprüche,
**dadurch gekennzeichnet,**
- **dass** die Fügeflächen (8') zumindest abschnittsweise einen Abstand zueinander aufweisen und/oder aneinander anliegen und/oder zwischen den Fügeflächen (8') wenigstens ein Blech (26) angeordnet ist, wobei das Blech (26) insbesondere sich im Wesentlichen in das Rohrinnere auskragend erstreckt und/oder einen im Wesentlichen L-förmigen Querschnitt aufweist.

9. Tragstruktur nach einem der vorhergehenden Ansprüche,
**dadurch gekennzeichnet,**
- **dass** die Tragstruktur eine Gründungsstruktur, insbesondere ein Gründungspfahl, insbesondere für eine Windkraftanlage auf See, insbesondere ein Monopile, Triplet, Tripod oder Jacket ist und/ oder
- **dass** die Tragstruktur eine Turmstruktur, insbesondere für eine Windkraftanlage an Land oder auf See, ist.

10. Tragstruktur nach einem der vorhergehenden Ansprüche,
**dadurch gekennzeichnet,**
- **dass** das Teilsegment (6) ein Teilzylindersegment ist.

11. Tragstruktur nach einem der vorhergehenden Ansprüche,
**dadurch gekennzeichnet,**
- **dass** miteinander verbundene, einen Ring bildenden Teilsegmente (6), deren jeweiligen Längskanten (8a, b) parallel zueinander angeordnet sind, ein Tragstruktursegment (20) bilden, und dass die Tragstruktur zumindest zwei Tragstruktursegmente (20) umfasst, deren Längsachsen (18) im Wesentlichen kollinear zueinander verlaufen, und deren Stirnkanten (10a, b) miteinander verbunden sind.

12. Tragstruktur nach einem der vorhergehenden Ansprüche,
**dadurch gekennzeichnet,**
- **dass** die aneinander anliegenden Stirnkanten (10a, b) zweier Tragstruktursegmente (20) zumindest teilweise umlaufend durch eine Schweißverbindung verbunden ist, die eine Dicke aufweist, die zumindest der Wandstärke der Metallplatte (2) entspricht.

13. Tragstruktur nach einem der vorhergehenden Ansprüche,
**dadurch gekennzeichnet,**
- **dass** die Längskanten (8a, b) von Teilsegmenten (6) zweier stirnseitig aneinander anliegenden Tragstruktursegmenten (20) zueinander winkelversetzt sind.

14. Tragstruktur nach einem der vorhergehenden Ansprüche,
**dadurch gekennzeichnet,**
- **dass** die jeweiligen Teilsegmente (6) jeweils in ihrer Längserstreckung (8) eine Längsachse (18) definieren, und dass die Längsachsen (18) der jeweiligen Teilsegmente (6) parallel zu einer Längsachse (18) der Tragstruktur verlaufen und/ oder
- **dass** die Biegungsradien der jeweiligen Teilsegmente (6) einem Krümmungsradius der Tragstruktur entsprechen.

15. Tragstruktur nach einem der vorhergehenden Ansprüche,
**dadurch gekennzeichnet,**
- **dass** die Lage der Teilnaht (14) bündig zur äußeren oder inneren Mantelfläche des Teilsegmentes (6), mittig oder in asymmetrischen Abstand zu den Mantelflächen des Teilsegmentes (6) liegt.

## Claims

1. Supporting structure, in particular for a wind power plant, with
- at least two partial segments (6) which are at least partially connected to one another and are each formed from a metal plate (2) having a longitudinal extension (8) and a widthwise extension (10), the longitudinal extension (8) being greater than the width extension (10), and wherein
- the partial segments (6) each have longitudinal edges (8a, b) extending in the longitudinal extension (8) and are joined to one another along the longitudinal edges (8a, b) by means of a welded joint in each case,
- the partial segments (6) each have end edges (10a, b) extending in widthwise extension (10), the partial segments (6) each being bent along their end edges (10a, b),
**characterized in that**
- the respective welded joint has, in sections, a thickness which is less than a wall thickness of the metal plate (2) and, in sections, a thickness which corresponds at least to the wall thickness of the metal plate (2).

2. Supporting structure according to claim 1,
**characterized in that**
- the bending radius (4) of the subsegments (6) is greater than, less than or equal to the radius of the enclosing circular line and/or
- the partial segments (6) are bent along their end edges (10a, b) in a non-round, in particular elliptical, faceted, hypocycloid or epicycloid manner.

3. Supporting structure according to claim 1 or 2,
**characterized in that**
- interconnected sub-segments (6) are offset relative to one another in longitudinal extension (8), so that their end edges (10a, b) are axially spaced apart from one another and/or
- interconnected sub-segments (6) are offset with respect to one another in the longitudinal extension (8), so that their end edges (10a, b) are axially spaced apart from one another and at least one subsegment (6) is spaced apart from the adjacent subsegment (6) in the longitudinal extension, so that a gap results.

4. Supporting structure according to one of the preceding claims,
**characterized in that**
- two sub-segments (6) are connected at mutually abutting joining surfaces (8') along the end edges (10a, b) via a welded joint, the welded joint having a thickness which, at least in sections, is less than a wall thickness of the metal plate (2).

5. Supporting structure according to one of the preceding claims,
**characterized in that**
- two joining surfaces (8') opposite one another on a partial segment (6) are offset relative to one another in longitudinal extension (8) along the longitudinal edges (8a, b) with welded joints whose thickness is at least equal to the wall thickness of one of the adjacent metal plates (2) and/or
- two joining surfaces (8') opposite one another on a sub-segments (6) along the longitudinal edges (8a, b) with welded joints, the thickness of which has at least the wall thickness of one of the adjacent sub-segments (6), are at the same height relative to one another in the longitudinal extent (8).

6. Supporting structure according to one of the preceding claims,
**characterized in that**
- in a section of the joining surfaces (8') with a welded joint, the thickness of which is less than the wall thickness of the metal plate (2), a retaining clip (24) is arranged between the joining surfaces (8') and/or
- the retaining clip (24) is enclosed on two sides by the joining surfaces (8') and/or terminates flush with the outer and/or inner lateral surface of at least one of the sub-segments (6)

7. Supporting structure according to one of claims 5 or 6,
**characterized in that**
- the retaining clip (24) has at least one concave recess, in particular a fillet (28), the recess merging into the joining surfaces (8') in particular essentially without any discontinuity, and/or has an essentially biconcave shape.

8. Supporting structure according to one of the preceding claims,
**characterized in that**
- the joining surfaces (8') are spaced apart from one another at least in sections and/or bear against one another and/or at least one metal sheet (26) is arranged between the joining surfaces (8'), the metal sheet (26), in particular, extending substantially in a projecting manner into the tube interior and/or having a substantially L-shaped cross section.

9. Support structure according to one of the preceding claims,
**characterized in that**
- the support structure is a foundation structure, in particular a foundation pile, in particular for a wind turbine at sea, in particular a monopile, triplet, tripod or jacket and/or
- the support structure is a tower structure, in particular for a wind turbine on land or at sea.

10. Support structure according to any of the preceding claims,
**characterized in that**
- the partial segment (6) is a partial cylinder segment.

11. Support structure according to any one of the preceding claims,
**characterized in that**
- interconnected partial segments (6) forming a ring, the respective longitudinal edges (8a, b) of which are arranged parallel to each other, form a support structure segment (20), and that the support structure comprises at least two support structure segments (20), the longitudinal axes (18) of which are substantially collinear with each other, and the end edges (10a, b) of which are interconnected.

12. Support structure according to one of the preceding claims,
**characterized in that**
- the mutually abutting end edges (10a, b) of two support structure segments (20) are connected at least partially circumferentially by a welded joint which has a thickness corresponding at least to the wall thickness of the metal plate (2).

13. Support structure according to one of the preceding claims,
**characterized in that**
- the longitudinal edges (8a, b) of partial segments (6) of two support structure segments (20) abutting each other at the end faces are angularly offset relative to each other.

14. Support structure according to one of the preceding claims,
**characterized in that**
- the respective partial segments (6) each define a longitudinal axis (18) in their longitudinal extension (8), and that the longitudinal axes (18) of the respective partial segments (6) run parallel to a longitudinal axis (18) of the support structure and/or
- the bending radii of the respective partial segments (6) correspond to a radius of curvature of the supporting structure.

15. Support structure according to one of the preceding claims,
**characterized in that**
- the position of the partial seam (14) lies flush with the outer or inner lateral surface of the partial segment (6), centrally or at an asymmetrical distance from the lateral surfaces of the partial segment (6).

## Revendications

1. Structure porteuse, en particulier pour une éolienne, avec
- au moins deux segments partiels (6) reliés au moins partiellement entre eux, qui sont formés respectivement d'une plaque métallique (2) ayant une extension longitudinale (8) et une extension en largeur (10), où l'extension longitudinale (8) est plus grande que l'extension en largeur (10), et où
- les segments partiels (6) ont respectivement des arêtes longitudinales (8a, b) s'étendant dans l'extension longitudinale (8) et sont reliés entre eux sur des surfaces d'assemblage (8') adjacentes les unes aux autres par une liaison soudée respective le long des arêtes longitudinales (8a, b),
- les segments partiels (6) ont respectivement des arêtes frontales (10a, b) s'étendant dans l'extension en largeur (10), où les segments partiels (6) sont respectivement courbés le long de leurs arêtes frontales (10a, b),
**caractérisé en ce que**
- le joint soudé respectif a par sections une épaisseur qui est inférieure à une épaisseur de paroi de la plaque métallique (2) et a par sections une épaisseur qui correspond au moins à l'épaisseur de paroi de la plaque métallique (2).

2. Structure porteuse selon la revendication 1,
**caractérisé en ce que**
- le rayon de courbure (4) des segments partiels (6) est supérieur, inférieur ou égal au rayon de la ligne circulaire qui les entoure et/ou
- les segments partiels (6) sont courbés le long de leurs arêtes frontales (10a, b) de manière non circulaire, en particulier de manière eliptique, à facettes, hypocycloïde ou épicycloïde.

3. Structure porteuse selon la revendication 1 ou 2,
**caractérisé en ce que**
- des segments partiels (6) reliés entre eux sont décalés les uns par rapport aux autres dans l'extension longitudinale (8), de sorte que leurs arêtes frontales (10a, b) sont espacées axialement les unes des autres, et/ou
- que des segments partiels (6) reliés entre eux sont décalés les uns par rapport aux autres dans l'extension longitudinale (8), de sorte que leurs arêtes frontales (10a, b) sont espacées axialement les unes des autres et qu'au moins un segment partiel (6) est espacé du segment partiel (6) voisin dans la direction longitudinale, de sorte qu'il en résulte un évidement.

4. Structure porteuse selon l'une des revendications précédentes,
**caractérisé en ce que**
- deux segments partiels (6) sont reliés par un assemblage soudé sur des surfaces d'assemblage (8') adjacentes l'une à l'autre le long des arêtes frontales (10a, b), où l'assemblage soudé a une épaisseur qui est, au moins par sections, inférieure à une épaisseur de paroi de la plaque métallique (2).

5. Structure porteuse selon l'une des revendications précédentes,
**caractérisé en ce que**
- deux surfaces d'assemblage (8') opposées l'une à l'autre sur un segment partiel (6) avec des assemblages soudés dont l'épaisseur a au moins l'épaisseur de paroi d'une des plaques métalliques (2) voisines sont décalées l'une par rapport à l'autre dans l'extension longitudinale (8) le long des arêtes longitudinales (8a, b) et/ou
- que deux surfaces d'assemblage (8') opposées l'une à l'autre sur un segment partiel (6) avec des assemblages soudés dont l'épaisseur présente au moins l'épaisseur de paroi d'un des segments partiels voisins (6) sont situées à la même hauteur l'une par rapport à l'autre dans l'extension longitudinale (8) le long des arêtes longitudinales (8a, b).

6. Structure porteuse selon l'une des revendications précédentes,
**caractérisé en ce que**
- dans une section des surfaces d'assemblage (8') avec un joint soudé dont l'épaisseur est inférieure à l'épaisseur de paroi de la plaque métallique (2), une agrafe de retenue (24) est disposée entre les surfaces d'assemblage (8') et/ou
- que l'agrafe de retenue (24) est bordée des deux côtés par les surfaces d'assemblage (8') et/ou se termine à fleur de la surface d'enveloppe extérieure et/ou intérieure d'au moins un des segments partiels (6).

7. Structure porteuse selon l'une des revendications 5 ou 6,
**caractérisé en ce que**
- l'agrafe de retenue (24) a au moins un évidement concave, en particulier un congé (28), où l'évidement se raccorde en particulier essentiellement sans discontinuité aux surfaces d'assemblage (8'), et/ou présente une forme essentiellement biconcave.

8. Structure porteuse selon l'une des revendications précédentes,
**caractérisé en ce que**
- les surfaces d'assemblage (8') ont, au moins par sections, un écart entre elles et/ou s'appliquent les unes contre les autres et/ou au moins une tôle (26) est disposée entre les surfaces d'assemblage (8'), où la tôle (26) s'étend en particulier essentiellement en porte-à-faux vers l'intérieur du tube et/ou a une section transversale essentiellement en forme de L.

9. Structure porteuse selon l'une des revendications précédentes,
**caractérisée en ce que**
- la structure porteuse est une structure de fondation, en particulier un pieu de fondation, en particulier pour une éolienne en mer, en particulier un monopieu, un triplet, un tripode ou un jacket et/ou
- que la structure porteuse est une structure de tour, en particulier pour une éolienne sur terre ou en mer.

10. Structure porteuse selon l'une des revendications précédentes,
**caractérisé en ce que,**
- le segment partiel (6) est un segment partiel de cylindre.

11. Structure porteuse selon l'une des revendications précédentes,
**caractérisé en ce que**
- des segments partiels (6) reliés entre eux et formant un anneau, dont les arêtes longitudinales respectives (8a, b) sont disposées parallèlement entre elles, forment un segment de structure porteuse (20), et que la structure porteuse comprend au moins deux segments de structure porteuse (20) dont les axes longitudinaux (18) sont essentiellement colinéaires entre eux, et dont les arêtes frontales (10a, b) sont reliées entre elles.

12. Structure porteuse selon l'une des revendications précédentes,
**caractérisé en ce que**
- les arêtes frontaux (10a, b) adjacents de deux segments de structure porteuse (20) sont reliés au moins partiellement sur leur pourtour par un assemblage soudé qui a une épaisseur qui correspond au moins à l'épaisseur de paroi de la plaque métallique (2).

13. Structure porteuse selon l'une des revendications précédentes,
**caractérisé en ce que**
- les arêtes longitudinales (8a, b) de segments partiels (6) de deux segments de structure porteuse (20) appliqués frontalement l'un contre l'autre sont décalées angulairement l'une par rapport à l'autre.

14. Structure porteuse selon l'une des revendications précédentes,
**caractérisé en ce que**
- les segments partiels (6) respectifs respectivement définissent un axe longitudinal (18) dans leur extension longitudinale (8), et que les axes longitudinaux (18) des segments partiels (6) respectifs s'étendent parallèlement à un axe longitudinal (18) de la structure porteuse et/ou
- que les rayons de courbure des segments partiels respectifs (6) correspondent à un rayon de courbure de la structure porteuse.

15. Structure porteuse selon l'une des revendications précédentes,
**caractérisé en ce que**
- la position du joint partiel (14) est située à fleur de la surface latérale extérieure ou intérieure du segment partiel (6), au centre ou à une distance asymétrique des surfaces latérales du segment partiel (6).
